Europäisches Patentamt

European Patent Office

Office européen des brevets

(11) Publication number: 0 440 290 A2

# EUROPEAN PATENT APPLICATION

(21) Application number: 91200144.3

(22) Date of filing: 25.01.91

(51) Int. Cl.⁵: A01F 25/20

(30) Priority: 29.01.90 NL 9000208

(43) Date of publication of application:
07.08.91 Bulletin 91/32

(84) Designated Contracting States:
AT BE CH DE DK ES FR GB LI NL SE

(71) Applicant: P.J. Zweegers en Zonen
Landbouwmachinefabriek B.V.
Nuenenseweg 165
NL-5667 KP Geldrop(NL)

(72) Inventor: Berkers, Antonius Johannes
Gebr. de Koningstraat 21
NL-5591 EP Heeze(NL)
Inventor: van Amstel, Leonardus Hendrikus
Maria
Roelantlaan 323
NL-5665 PK Geldrop(NL)

(74) Representative: Noz, Franciscus Xaverius, Ir.
et al
Algemeen Octrooibureau P.O. Box 645
NL-5600 AP Eindhoven(NL)

(54) Mobile transport device for removing crop from a silage pit and/or for dosaging said crop.

(57) The invention relates to a mobile transport device for removing crop from a silage pit, said device being provided with a frame (1) with a loading platform and a loading space located. The loading space has been bounded at least by upright side boards (18-20). An upwardly extending loading board (33) is located near one end of said loading space, whereby said loading board (33) near its upper end has been pivotally coupled about a horizontal pivot axis to a pair of arms (28) located near the sides of the transport device. Said arms (28) near their ends remote from the loading board (33) have been pivotally coupled to the frame (1), by means of further pivot axes (27) extending parallel to said first cited pivot axis, whilst between at least one arm (28) and the frame (1) there is provided a setting means (29), by means of which the arms (28) with the loading board (33) are pivotable about said further pivot axes (27) with respect to the frame (1). A further pair of telescopically adjustable arms (35) located near the sides of the transport device are disposed between the loading board (33) and the frame (1), said arms (35) with their respective ends being pivotally coupled, likewise by means of horizontal pivot axes (36,39) to the loading board (33) and the frame (1) respectively.

FIG.1

EP 0 440 290 A2

# MOBILE TRANSPORT DEVICE FOR REMOVING CROP FROM A SILAGE PIT AND/OR FOR DOSAGING SAID CROP.

The invention relates to a mobile transport device for removing crop from a silage pit, said device being provided with a frame with a loading platform and a loading space located thereabove, said loading space being bounded at least by upright side boards, an upwardly extending loading board being located near one end of said loading space, said loading board near its upper end being pivotally coupled about a horizontal pivot axis to a pair of arms located near the sides of the transport device, said arms near their ends remote from the loading board being pivotally coupled to the frame, by means of further pivot axes extending parallel to said first cited pivot axis, whilst between at least one arm and the frame there is provided a setting means, by means of which the arms with the loading board are pivotable about said further pivot axes with respect to the frame.

When such a mobile transport device is used a certain quantity of crop to be accommodated in the loading space can be detached from crop heaped up in a silage pit by means of said loading board, and be pulled onto the transport device by means of the loading board by suitably moving the loading board with respect to the frame. With known transport devices of the above kind setting cylinders are disposed between the ends of the arms located near the loading board and the loading board, in order to make it possible for the board to be pivoted with respect to the arms. Said setting cylinders are located at a vulnerable place thereby, whilst the arrangement of the setting cylinders at that location at the same time imposes restrictions as to the design and the loading possibilities of the transport device.

According to the invention a further pair of telescopically adjustable arms located near the sides of the transport device are disposed between the loading board and the frame, said arms with their respective ends being pivotally coupled, likewise by means of horizontal pivot pins, to the loading board and the frame respectively.

When using such a construction according to the invention a solid support of the loading board can be realized, also in those case where the loading board is narrower than the distance between the arms, whilst further the movements of the loading board can be effectively controlled in a simple manner.

A further aspect of the invention relates to a mobile transport device for removing crop from a silage pit, said transport device being provided with a frame supported by ground wheels, with a loading platform and a loading space located thereabove, said loading space being bounded at least by upright side boards, near one end of which loading space there is provided a drawbar for attaching the transport device to a tractor or the like, an upwardly extending loading board being located near an opposite end of said loading space, said loading board near its upper end being pivotally coupled, about a horizontal pivot axis, to a pair of arms located near the sides of the transport device, said arms near their ends remote from the loading board being pivotally coupled to the frame by means of further pivot axis extending parallel to said first cited pivot axes, said arms being pivotable with respect to the frame and said loading board being pivotable with respect to the arms by way of driving means, whilst the ground wheels are secured to supporting arms, which are pivotable with respect to the frame, by way of setting means, about a horizontal pivot axis extending transversely to the longitudinal direction of the frame.

When using such a transport device the height of the loading platform can be adjusted to the height required when loading and/or unloading by pivoting the supporting arms, as well as by moving down the end of the drawbar attached to a tractor or the like. The tractor driver must thereby attempt, by suitably controlling the setting means that pivot the supporting arms relative to the frame, and the means for vertically moving the attachment means provided on the tractor, to which the drawbar of the transport device is attached, to move the loading platform of the transport device more or less parallel to itself.

According to the invention the drawbar is coupled to the frame by means of a further horizontal pivot axis extending transversely to the longitudinal direction of the transport device, whilst between the drawbar and the supporting arms there is provided a coupling mechanism, in such a manner that when the setting means are actuated the drawbar and the supporting arms are pivoted, whilst the loading platform is caused to move at least parallel to itself.

By using the invention it is easier for the tractor driver to effect the vertical movement of the loading platform, since he needs to operate only one control mechanism, whilst undesirable tipping movements of the conveyor are avoided thereby.

A third aspect of the invention relates to a mobile transport device provided with a frame supported by ground wheels, with a loading platform supported by the frame and with a drawbar, by means of which the frame can be attached to a tractor or the like, said ground wheels being mounted on arms which are pivotable with respect to the frame, whilst between the arms and the frame there are provided stabilizing means which are pivotally coupled to the frame, said stabilizing means attempting to keep the arms in a desired position with respect to the frame.

When using transport devices of this kind it is desirable to know how much material, e.g. cattle fodder, is present on the loading platform. In practice use is made of three or four measuring boxes, which are arranged between the loading platform and the frame. Another possibility is to couple the wheel axles and the attachment means by which the conveyor can be attached to a tractor or the like to the other part of the frame by means of bending bars. The deformations which the measuring boxes or bending bars, as the case may be, undergo are used as signals, which are processed in a suitable device for computing the weight to be measured. Known systems of this kind are costly and vulnerable, however.

According to the invention the drawbar is likewise coupled to the frame so as to be vertically movable, and further stabilizing means are provided between the frame and the drawbar, said stabilizing means attempting to keep the drawbar in a desired position with respect to the frame, whilst the various stabilizing means are equipped with measuring means for ascertaining the forces exerted on said stabilizing means. In this manner it is possible to obtain a simple and reliably operating mechanism for ascertaining the weight of the load present on the loading platform, while as few measuring means as possible are used.

A further aspect of the invention relates to a system for mixing fodder while making use of a mobile transport unit, said transport unit being provided with a frame, with a loading space supported by the frame, said loading space having means of conveyance for conveying fodder present in the loading space in the longitudinal direction of the loading space, and with a cross conveyor located near one end of the loading space, by means of which the fodder supplied to the cross conveyor by said means of conveyance can be discharged from the wagon.

There are known mobile transport units equipped with mixing means, by which the fodder accommodated in the loading space can be mixed. These are complicated and costly conveying units, however.

The object of the invention is to obtain a simpler and more universal solution for a system suitable for mixing fodder.

According to the invention this objective can be accomplished in that the system furthermore comprises a housing having a stationary arrangement, with throwing means present therein, said housing in combination with the transport unit being designed such that fodder can be supplied to the throwing means accommodated in said housing by means of the cross conveyor, whilst a discharge line is connected to the housing, whose outlet opening will be located above the loading space during operation of the system.

When using the construction according to the invention use may be made of a comparatively inexpensive, light transport unit for conveying fodder. When a mixing possibility is required it is possible to acquire, besides said conveying unit, the stationary device provided with a throwing means, by means of which the fodder discharged from the transport unit can be resupplied to the transport unit, so that this fodder can be circulated in a closed circuit in order to be mixed. The part of the system having a stationary arrangement may thereby be used in combination with several mobile transport units.

The invention also relates to a mobile transport device provided with a frame, with a loading platform supported by said frame and with a loading space located thereabove which is bounded at least by upright side boards, an upwardly extending loading board being located near one end of said loading space, said loading board near its upper end being pivotally coupled about a horizontal pivot axis to a pair of arms located near the sides of the transport device said arms near their ends remote from the loading board being pivotally coupled to the frame, by means of further pivot axes extending parallel to said first cited pivot axis, said arms being pivotable with respect to the frame and said loading board being pivotable with respect to the arms by way of driving means.

According to the invention the loading board is thereby provided, near its lower side, at at least one side, with a knife in the shape of a substantially vertical segment of a circle extending through $\pm 180°$, said knife being movable to and fro about its centre located at the side of said segment of a circle remote from the loading space.

By using such a segmental knife an effective cut of the crop is effected when a certain quantity of crop is being detached from a silage pit by means of said loading board.

The invention will be explained in more detail hereafter, with reference to a few possible embodiments of the construction according to the invention diagrammatically illustrated in the accompanying Figures.

Figure 1 is a diagrammatic side elevational view of a mobile transport device according the invention.

Figure 2 is a plan view of Figure 1.

Figure 3 is an elevational view of Figure 1, seen according to the arrow III in Figure 1, wherein parts have been left out in order to be able to show parts located therebehind.

Figure 4 shows the transport device while fodder is being removed from a silage pit.

Figure 5 is a top view of the transport device in combination with a housing comprising a throwing means.

Figure 6 is a side elevational view of Figure 5.

Figures 7 - 13 diagrammatically illustrate several possible embodiments of means that make it possible for the loading platform of a transport device to move parallel to itself.

Figures 14 - 20 diagrammatically illustrate possible embodiments of means for weighing the contents of a transport device.

Figures 21 - 27 show possible embodiments of means for moving the loading board.

Figure 28 diagrammatically illustrates a carried transport device.

Figure 29 is a side elevational view of the lower end of a loading board, with a segmental saw blade secured thereto.

Figure 30 is a plan view of the two segmental knives provided near the sides of the loading board, with a few further parts associated therewith.

Figures 31 and 32 show parts of the driving mechanism for the segmental knives.

Figures 34 - 35 show further driving possibilities of the cutting means provided on the loading board.

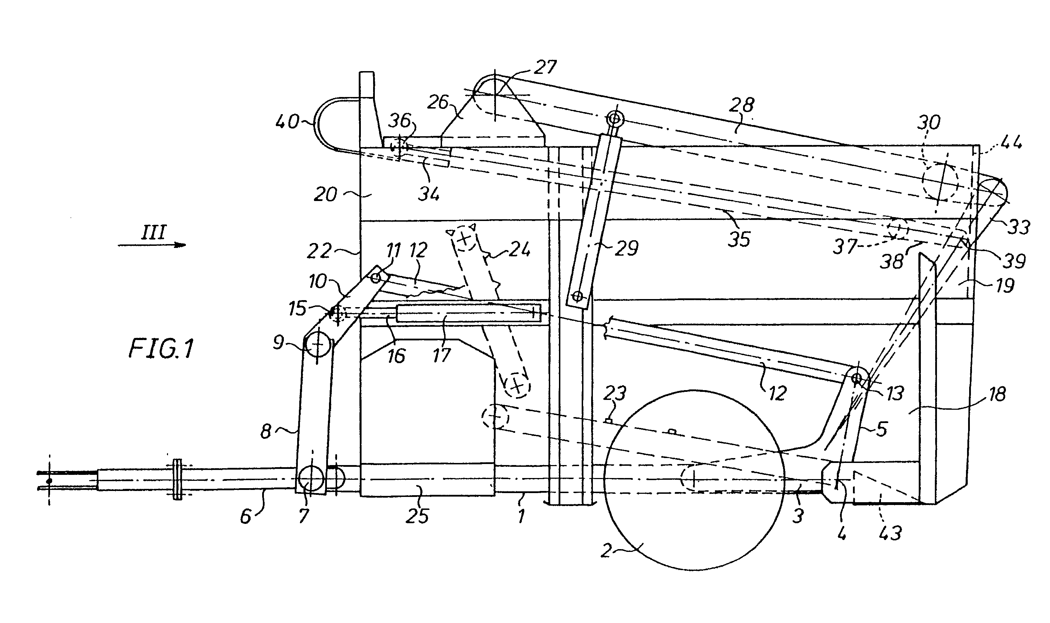

The wagon or transport device 1 illustrated in Figures 1 - 4 comprises a frame 1, which is supported by a pair of ground wheels 2 disposed on both sides of the frame. Each of said ground wheels 2 is thereby mounted on one end of an arm 3, which extends from the centre of the ground wheel 2 in question towards the rear. Each arm 3 is pivotable with respect to the frame, about a pivot axis 4 extending perpendicularly to the longitudinal direction of the frame. Each supporting arm 3 thereby forms, together with an upwardly extending arm 5 which is fixed to the end of the supporting arm 3 located near the pivot axis 4, a toggle lever which isrotatable about the pivot axis 4.

Near its front side the wagon or transport device has a drawbar 6, which is attached to a horizontal beam 7 extending perpendicularly to the longitudinal direction of the wagon, said beam being pivotally journalled about its longitudinal axis in the frame. To the beam 7 there are secured upwardly extending arms 8, connecting the beam 7 with a beam 9 extending parallel to the beam 7.

To the beam 9 there are furthermore secured upwardly extending arms 10. The ends of coupling rods 12 are pivotally coupled to the upper ends of the arms 10, by means of pins 11 extending parallel to the beam 9. The other ends of said coupling rods 12 are pivotally coupled to the upper ends of the arms 5 by means of pins 13 extending parallel to the pins 11.

To the arms 10 there are pivotally coupled, by means of pins 15 extending parallel to the pins 11, the ends of piston rods 16 of (a) setting cylinder(s) 17 coupled to the frame, in points located between the beam 9 and the pins 11.

The wagon is furthermore provided with upright side boards, built up of lower, vertically extending parts 18, which blend into parts 19 sloping upwards towards the outside, said parts 19 at their upper ends joining parts 20 which extend vertically again. Furthermore a fixed front board 22 is provided between the front ends of said side walls 18 - 20.

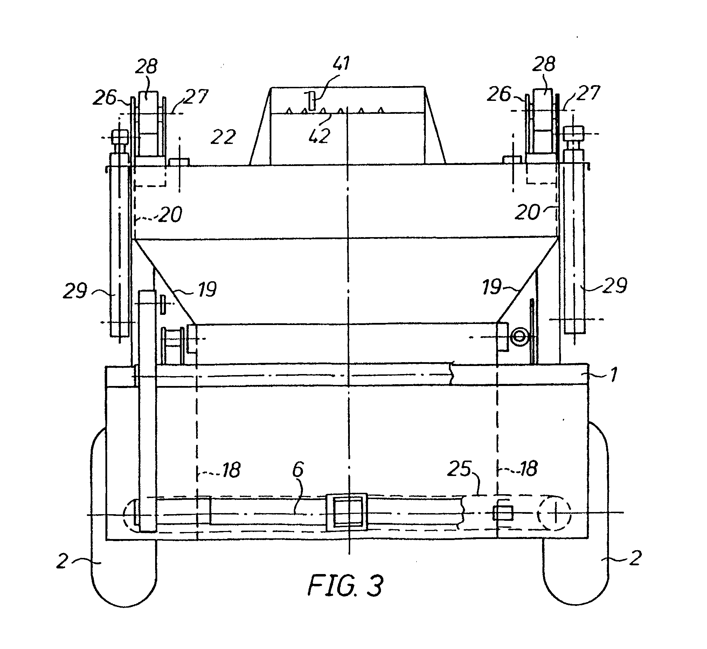

In the loading space bounded by the side walls 18 - 20 and the front board 22 there is provided, near the bottom end of said loading space, a floor formed by a roller bottom 23 in this embodiment, which floor can be driven, by means not shown, such as e.g. a hydromotor, in such a manner that the upper part of the roller bottom moves toward the left, when seen in Figure 1. The roller bottom 23 thereby slopes slightly upwards from the rear side of the loading space towards the front, its end being located under an endless conveyor belt 24 disposed near the front end of the roller bottom 23, which endless conveyor belt 24 slopes upwards at a considerably steeper angle than the roller bottom. Instead of a conveyor belt it is also possible to use other means of conveyance, e.g. conveyor chains, whether or not equipped with carriers, roll feeders etc. The upper discharge end of the conveyor belt 24 is located above and endless conveyor belt 25 disposed near the lower side of the loading space, directly behind the front board 22 and extending perpendicularly to the longitudinal direction of the wagon, said conveyor belt 25 forming a cross conveyor, by means of which crop supplied via the roller bottom 23 and the conveyor 24 can be discharged from the wagon towards the left and/or towards the right, seen in Figure 3.

Upwardly extending supports 26 are secured to the upper side of the side boards 18 - 20, near the front end of the loading space. To said supports there are coupled, by means of pivot axes 27 extending horizontally and perpendicularly to the longitudinal direction of the wagon, the front ends of arms 28 extending from said supports towards the rear. The arms 28 are pivotable with respect to the frame of the wagon or transport device, by means of setting cylinders 29 provided between the arms 28 and the frame, said setting cylinders being disposed rather closely to the supports 26.

Near their rear ends the arms 28 are interconnected by a cross beam 30. To said cross beam 30 there are connected, spaced by some distance from its ends connected to the arms 28, lugs 31 which extend towards the rear. The upper end of a loading board 33 is pivotally coupled to said lugs 31, by means of pins or pivot axes extending parallel to the pivot axes 27.

Arms, each consisting of two parts 34 and 35 which are telescopically movable relative to each other, are coupled to the structure of the wagon in points located in front of and slightly below the pivot axes 27, by means of pivot axes 36 extending parallel to the pivot axes 27. The part 34 of each arm 34, 35 is thereby movable with respect to the part 35, by means of a setting cylinder (not shown) accommodated in the part 35.

The ends of the arms 34, 35 remote from the pivot axes 36 are connected to a beam 37 extending parallel to the beam 30. To the beam 37 there are secured arms 38 extending towards the rear, whose ends are pivotally coupled to the loading board by means of pivot axes 39 extending parallel to the pivot axes 32.

A pull-push cable 40 is connected (Figure 1) to one of the parts 35 of the arms 34, 35 which are pivotally connected to the loading board 33, said pull-push cable being connected, in a manner not shown, to a pointer 41 which, as will be explained in more detail hereafter, is movable, by means of said cable 40, along a graduation 42 provided on the front side of the loading space.

Near the rear side of the loading space adjacent the lower most end of the roller bottom 43 there has been provided a beam 43 defining the supply opening which can be closed by the loading board 33, the upper surface of said beam 43 being upwardly inclined the front end of the loading space.

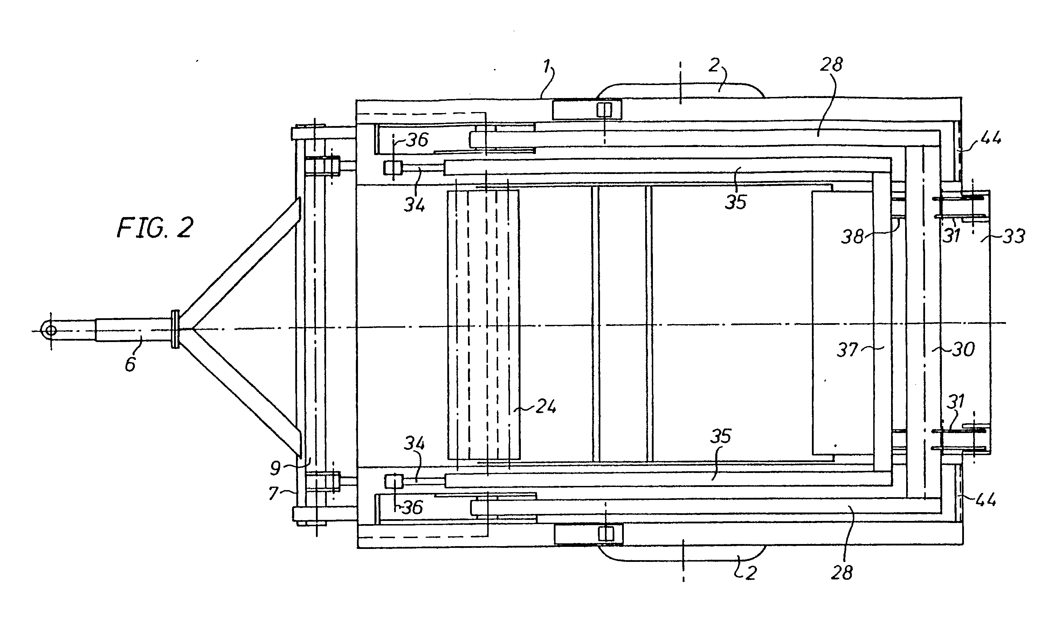

As will be apparent, in particular from Figure 2, the width of the loading board 33 in the illustrated embodiment is adapted to the width between the upright parts 18 of the loading space bounded by the two side walls that are located closest together. The arms 28 and 34, 35 are thereby disposed above the wall parts 19 that slope upwards to the rear again. Near the rear ends of said wall parts 19 there are provided boards 44, which extend upwards from said wall parts 19, between which boards the loading board 33 can move, said boards 44 approximately extending to the upper edges of said upright wall parts. Said boards 44 prevent crop from undesirably falling out of the loading space.

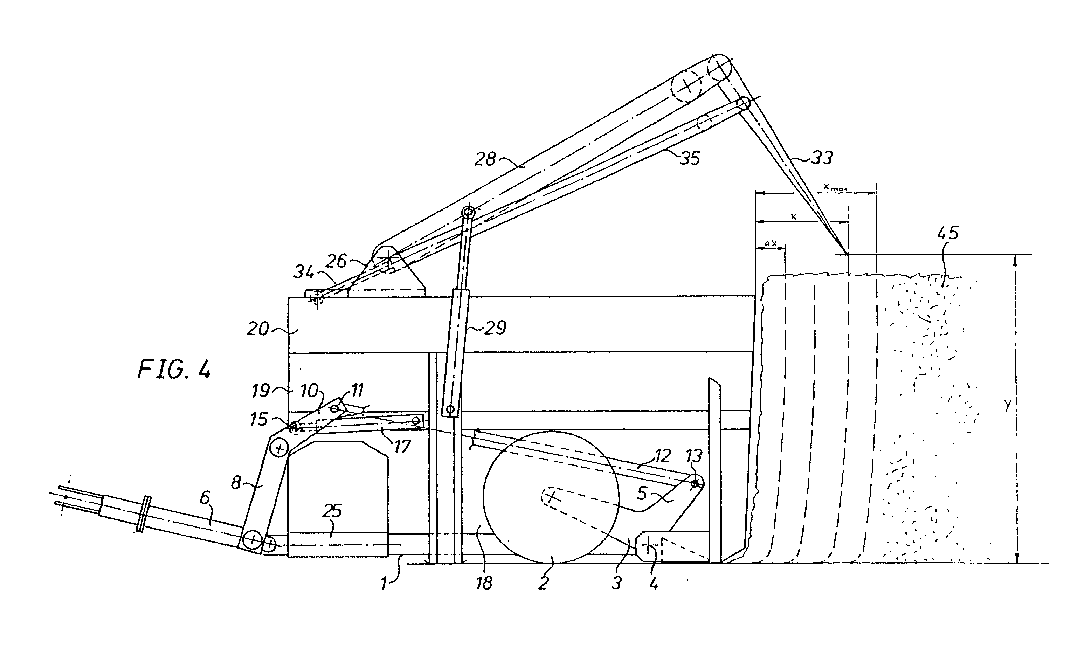

The above-described conveyor may be used for removing silage. As is illustrated in Figure 4 the wagon may be reversed against a heap of silage 45 for this purpose, whereby first the loading board has been put in its upwardly pivoted position illustrated in Figure 4 by manipulating the setting cylinders 29 and the setting cylinders accommodated in the arms 34, 35. After the wagon has been correctly positioned the wheels 2 may be pivoted upwards about the pivot axes 4 by actuating the setting cylinders 17. The construction is thereby such that also the free end of the drawbar 6 pivots upwards with respect to the frame of the wagon, as is illustrated in Figure 4. By correctly dimensioning the various part it is effected that when the height of the point in which the free end of the drawbar 6 is attached to a tractor or the like is maintained, the frame of the wagon, in particular the loading platform of the wagon, moves parallel to itself when the setting cylinder 16, 17 is actuated, so that no undesirable tipping movements of the wagon about an axis extending transversely to the longitudinal direction of the wagon occur, and the wagon, independent of the adjusted height of the loading platform, can be maintained in a position generally considered to be optimal for loading, transport and unloading.

Once the wagon has been put in the position illustrated in Figure 4, the lower cutting edge of the loading board may be placed on the upper side of the heap of silage 45, and then be moved downwards as indicated by dotted lines, in such a manner that a first layer having a width $\Delta x$ is cutt off the heap of silage. By suitably arranging the pivot points of the arms 28 and 34, 35 it may be effected that the cutting edge moves downwards along a more or less vertical line. At the end of its movement the lower edge of the cutting blade will be pivoted inwards into the interior of the wagon, in order to push the cut-off crop into the loading space. This operation may be repeated several times, as is indicated in Figure 4 by means of more or less vertically extending dotted lines, until, at a distance $X_{max}$ from the rear edge of the loading space, the maximum position has been reached in which it is still possible to engage the silaged crop by means of the lower edge of the loading board in the illustrated position. When the loading space is not sufficiently filled at that stage the loading space will have to be moved upwards by pivoting the wheels and the drawbar downwards with respect to the frame, after which the wagon can be reversed and the loading space moved downwards again, whereupon the above-described loading operation can be started anew.

Since the wagon 41 is connected, by means of the cable 40, to one of the parts 35 coupled to the laoding board, an indication as to the distance between the rear side of the loading platform and the lower edge of the loading board can be given to the tractor driver by means of the pointer 41 and the graduation 42.

As a result of the above-described comparatively narrow construction of the loading board and the lower part of the loading space it is possible for the loading board to move between the wheels supporting the frame. With longer embodiments of the wagon, wherein the lower end of the loading board will not come near the wheels supporting the wagon in its retracted position, it will also be possible to make at least the part of the loading space located behind the wheels as wide as possible, and to make the loading board correspondingly wide.

Since in the above-described embodiment illustrated in the Figures the arms supporting and moving the loading board are furthermore located outside the lower wall parts 18 bounding the loading space, when seen in plan view, it will also be possible for e.g. large round bales of crop or the like to be moved into the loading space by means of the loading board and be transported by means of the wagon, without the arms 28 and 34, 35 coming into conflict with the load that is present.

When the wagon is to be unloaded the roller bottom 23 and the conveyor belts 24 and 25 can be operated, as a result of which the crop can be carried to the conveyor 24 by means of roller bottom 23. The conveyor 24 will move the crop upwards and deposit it on the conveyor 25. The conveyor 25 will discharge the crop from the wagon transversely to the longitudinal direction of the wagon. By controlling the vertical adjustment of the wheels 2 with respect to the frame the height of the conveyor belt 25 may possibly be adjusted to the height of feeding troughs or the like into which the crop is to be discharged.

When using the above-described construction the reaction forces set up near the wheel-axles and the front end of a drawbar attached to a tractor or the like, under the influence of the weight of the wagon and the load in the wagon, are transmitted to the two setting cylinders 16, 17 (theoretically one setting cylinder 16, 17 will be sufficient for vertically moving the wheels 2 and the drawbar 6). This may be efficiently used for weighing the load accommodated in the conveyor, since the force exerted on said cylinders will be at least substantially directly proportional to the total weight of the conveyor, inclusive of the possible load.

Based on this it will be possible to ascertain the total weight by e.g. electrically or mechanically measuring the oil pressure in the setting cylinders and converting the value of the pressure thus measured, by means of suitable calculating means known per se or the like, into a weight value, which may then e.g. be shown on a screen by digital or analog display. Another possibility is to incorporate a force absorber or bending bar in one of the pivot points in which the setting cylinder(s) 16, 17 is (are) pivotally coupled to the frame or to the arms 10, and to convert the signal formed by the deformation of said force absorber or bending bar again, in a manner known per se, into a weight signal. Thus several possibilities will be available to those skilled in the art for ascertaining the forces exerted on the setting cylinders 16, 17, and to convert said forces into a weight indication.

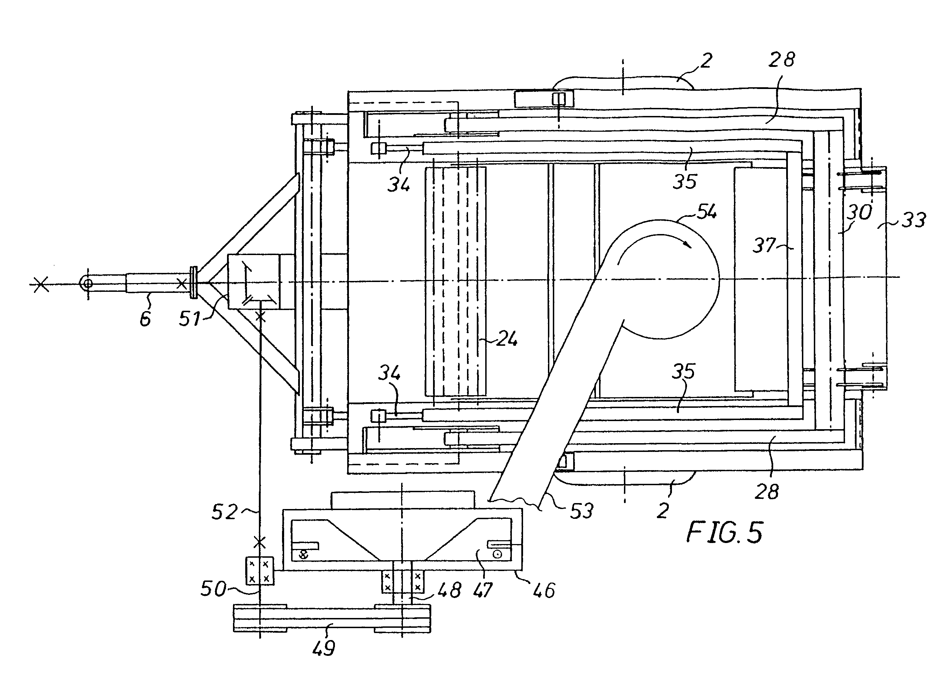

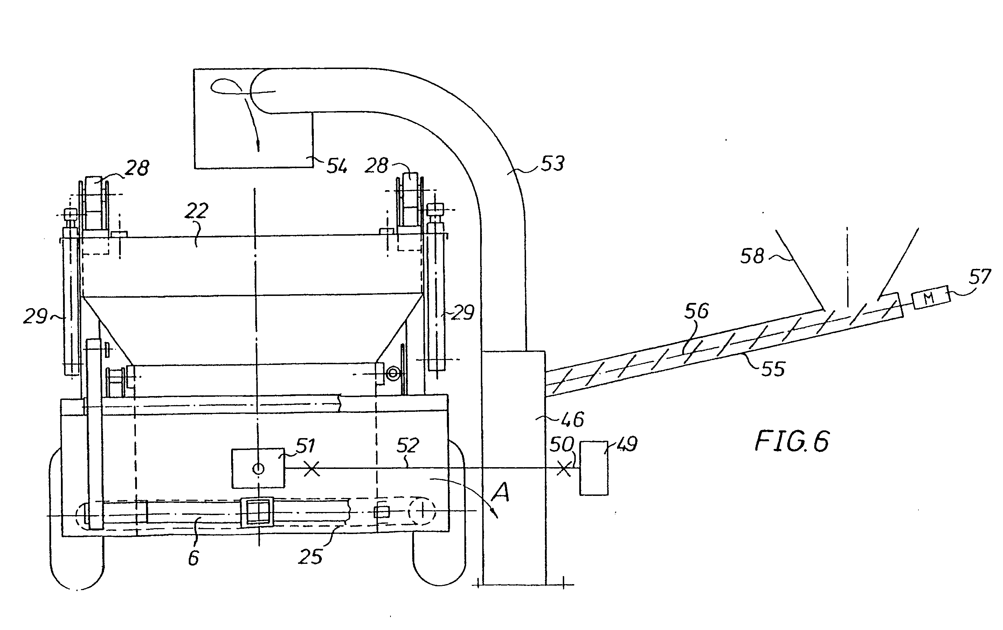

The above-described wagon or conveyor is eminently suited for use in a system for mixing fodder. For this purpose the wagon may be used in combination with a stationary mixing device provided with a housing 46 and an impeller 47 (Figures 5, 6) journalled therein, which is rotatable about a horizontal axis of rotation, which may e.g. be constructed in the shape of a chopping wheel.

The impeller 47 is secured to a shaft 48, which is coupled, by means of a belt transmission 49, to a shaft 50 extending through the housing 46, parallel to the shaft 48.

In the illustrated embodiment the wagon is provided with a gear box 51 having a right-angled gear transmission, which may be driven, in a manner known per se, from the power take-off of a tractor or the like pulling the wagon during operation. For driving the impeller 47 said gear box 51 may be coupled to the shaft 50 by means of an intermediate shaft 52, as is diagrammatically illustrated in Figure 5.

An upwardly extending line 53 is connected to the housing 46, which line opens tangentially into the upper end of a vessel 54, which is provided with an outlet opening at its bottom side.

As is illustrated in Figures 5 and 6 the construction is thereby such that by manoeuvring the wagon adequately said wagon may be arranged such that crop discharged from the wagon by means of the cross conveyor 25 can be deposited into the interior of the housing 46, via an opening provided in a side wall of said housing, as is diagrammatically indicated by means of the arrow A in Figure 6. By rotating the impeller 47 said supplied crop will be mixed, possibly be cut into short pieces and be thrown out via the tube 53. The crop thereby lands in the vessel 54 located above the loading space, where the velocity of the crop is reduced and the crop will fall into the loading space via the opening provided in the bottom of the vessel 54. From the loading space the crop may be supplied to the mixer again. It will be apparent that in this manner the crop can be led through the system formed by the wagon and the mixer, in order to obtain an effective mixing of the crop.

As is diagrammatically indicated in Figure 6 any concentrated feed or the like may furthermore be supplied in the housing 46, using a screw conveyor 56 which is arranged in a gutter 55 and which can be driven by means of a motor 57. The discharge end of the gutter 56 is connected to the interior of the housing 46. Material to be supplied to the housing may be supplied to the gutter 56 from a bunker 58. This separately supplied concentrated feed or the like may be admixed in accurately ascertained quantities by means of small, yet accurate weighing means, so that this usually costly feedstuff can be used economically.

Instead of driving the mixer 46, 47 from the wagon it would also be conceivable to provide said mixer with its own driving source. Of course it will be possible to use the mixer 46, 47 in combination with several transport devices.

Once the crop has been mixed to the degree required, said crop may be discharged from the wagon in a usual manner, in order to be fed to cattle or the like. Possibly the impeller 47 may have the shape of a sort of chopping wheel, so that it is also possible to cut the crop while mixing is being carried out, if required.

Of course many variations and/or additions to the above-described embodiment are possible within the spirit and scope of the invention.

In the various Figures to be discussed hereafter those parts that correspond with the parts of the embodiment described above have been given the same reference numbers as the ones used above. In most embodiments various setting cylinders, coupling rods, arms and the like will furthermore be provided on both sides of the wagon, although it will also be conceivable to provide at least certain parts at only one side of the wagon.

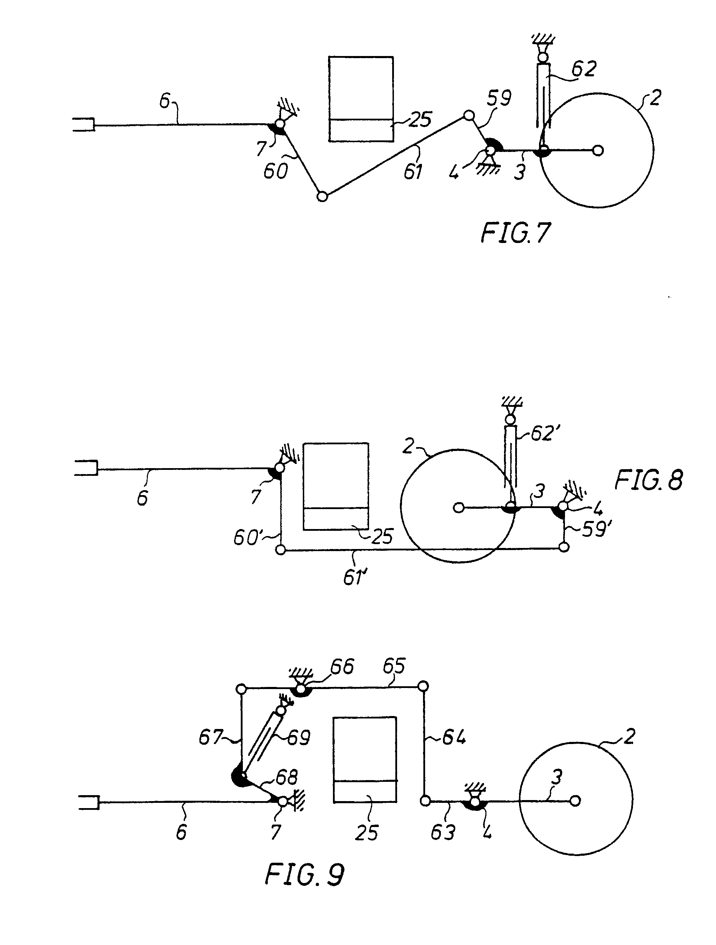

Figure 7 shows a further possible embodiment for moving the loading floor parallel to itself.

With this embodiment an arm 59 is connected to the wheel arm 3, said arm 59 being coupled to an arm 60 which is secured to the drawbar 6 by means of a coupling rod 61. Said arm 59 thereby slopes upwards to the front from its point of attachment to the wheel arm 3 located near the pivot pin 4, whilst the arm 60 slopes downwards to the rear from its point of attachment located at the rear end of the drawbar 6.

Aa setting cylinder 62, provided between the frame of the wagon and the wheel arm 3, furthermore acts on the wheel arm 3.

It will be apparent that when the wheel 2 is pivoted upwards or downwards by means of the setting cylinder 62, the free end of the drawbar 6 will also be moved upwards or downwards. By suitably selecting the dimensions of the various parts a parallel movement of the loading floor may be effected thereby.

With the embodiment illustrated in Figure 8 the pivot axis 4 is disposed behind the wheel 2. A downwardly extending arm 59' is furthermore connected to the wheel arm 3, whilst a downwardly extending arm 60' is connected to the drawbar 6. The arms 59' and 60' are mutually coupled by means of a coupling rod 61'. Between the frame of the wagon and the drawbar 3 there is again provided a setting cylinder 62'.

A study of Figure 8 will show that also with such an embodiment a parallel movement of the loading floor of the wagon can be achieved.

With the embodiment illustrated in Figure 9 the wheel arm 3 has an extension 63 extending beyond the pivot axis 4. The end of said extension or arm 63 is connected to a lever 65 by means of a coupling rod 64, said lever being coupled to the frame of the wagon in a point 66 located between its ends. The other end of said lever 65 is pivotally coupled to one end of an arm 67. The other end of said arm 67 is fixed to one end of an arm 68. The other end of said arm 68 is fixed to the rear end of the drawbar 6. The two arms 67 and 68 include an obtuse angle with each other. Between the frame and the point in which the two arms 67 and 68 are connected there is provided a setting cylinder 69, by means of which the drawbar 6 can be pivoted with respect to the frame. From Figure 9 it will be apparent that such upward or downward pivoting of the free end of the drawbar will also result in upward or downward pivoting of the wheel 2. When the various parts are correctly dimensioned it will again be possible to effect a parallel movement of the loading floor of the wagon hereby.

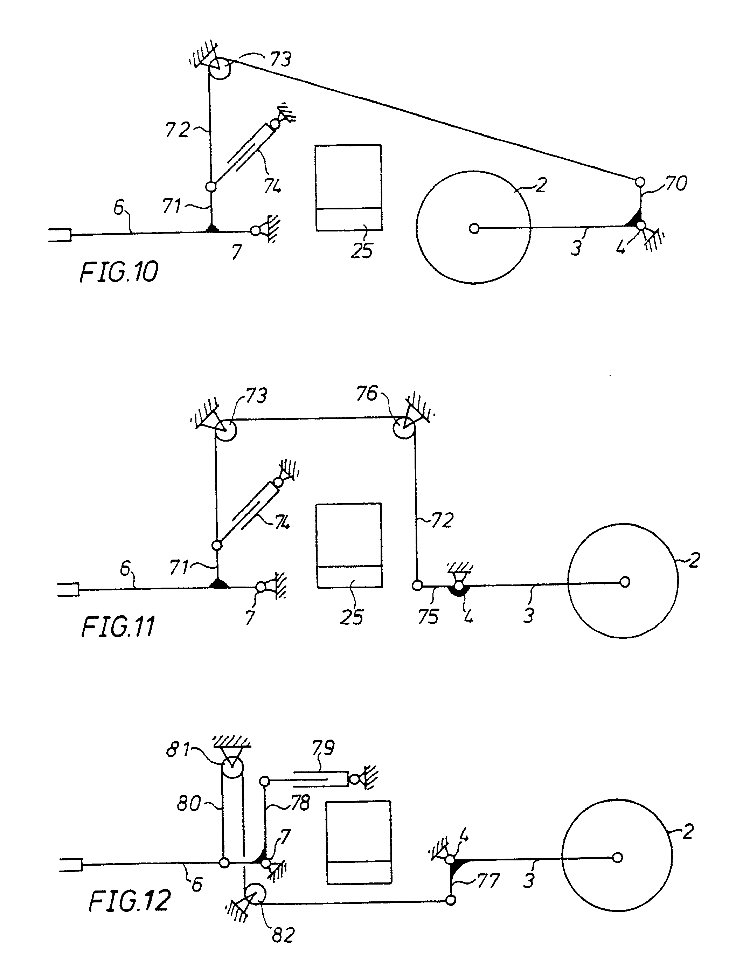

With the embodiment illustrated in Figure 10 an upwardly extending arm 70 is secured to the supporting arm 4 at the end of the supporting arm that is located near the pivot axis. To the drawbar 6, between its ends, there is secured an upwardly extending arm 71. The upper ends of said arms 70 and 71 are interconnected by means of a cable 72, which is passed over a pulley 73, said pulley being secured to the frame of the wagon in a point located above the drawbar 6, spaced by some distance therefrom. Between the upper end of the arm 71 and the frame of the wagon there is furthermore provided a setting cylinder 74. By means of said setting cylinder 74 the drawbar 6 can be pivoted with respect to the frame. The movement of the arm 6 will be transmitted, via the cable 72 and the arms 71 and 70, to the wheel arm 3. When the various parts are correctly dimensioned it will be possible to effect a parallel movement of the loading floor of the wagon with this embodiment as well.

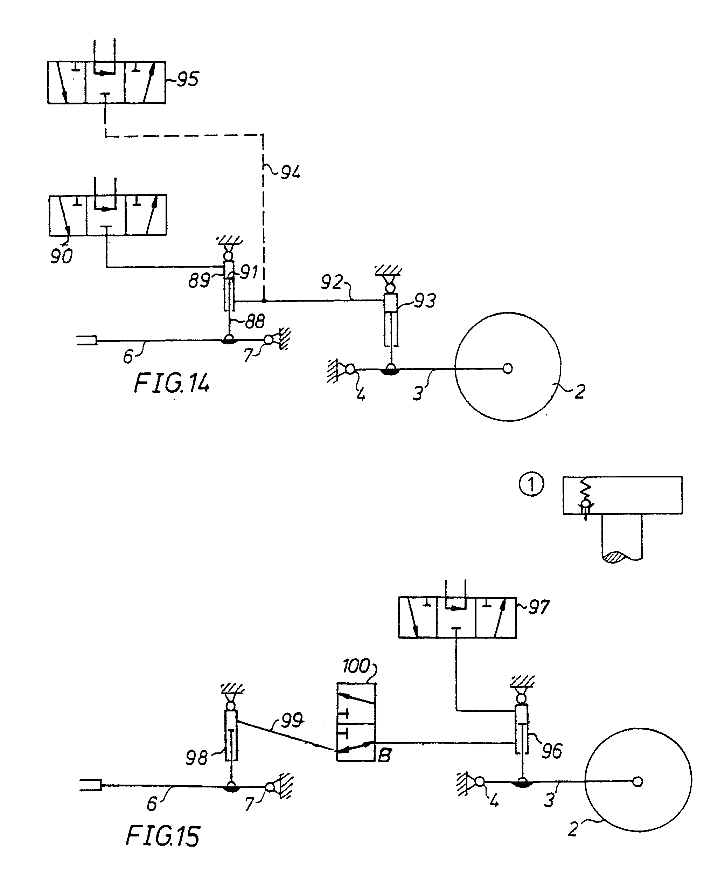

The embodiment according to Figure 11 in large measure corresponds with the embodiment according to Figure 10. In this embodiment, however, the cable 72 is passed over two pulleys 73 and 76 which are secured to the frame of the wagon, whilst the end of the cable 72 remote from the arm 71 is secured to an arm 75, which is secured to the wheel arm 3 and extending beyond the pivot axis 4, in line with the wheel arm 3.

A study of Figure 11 will show that, also when such an embodiment is used, it will be possible to effect a movement of the loading floor of the wagon parallel to itself.

With the embodiment according to Figure 12 a downwardly extending arm 77 is secured to the end of the wheel arm 3 located near the pivot axis 4. To the rear end of the drawbar 6 there is furthermore secured an upwardly extending arm 78. Between the upper end of the arm 78 and the frame of the wagon there is provided a setting cylinder 79, by means of which the drawbar 6 is pivotable with respect to the frame. A cable 80, secured to the lower end of the arm 77 with one end, is passed over a pair of pulleys 81 and 82 which are secured to the frame of the wagon, in the manner illustrated in Figure 12. The other end of said cable 80 is secured to the drawbar 6, between the ends of said drawbar. A study of said Figure will show that when the drawbar 6 is pivoted with respect to the frame, by means of the setting cylinder 79, the wheel 2 is likewise pivoted with respect to the frame, about the pivot axis 4, and that in such a manner that when the free end of the drawbar 6 moves downwards, the wheel 2 also moves downwards with respect to the frame, and an upward movement of the free end of the drawbar with respect to the frame results in an upward movement of the wheel 2 with respect to the frame. When the various parts are correctly dimensioned it will be possible to effect a parallel movement of the loading floor of the wagon with this embodiment as well.

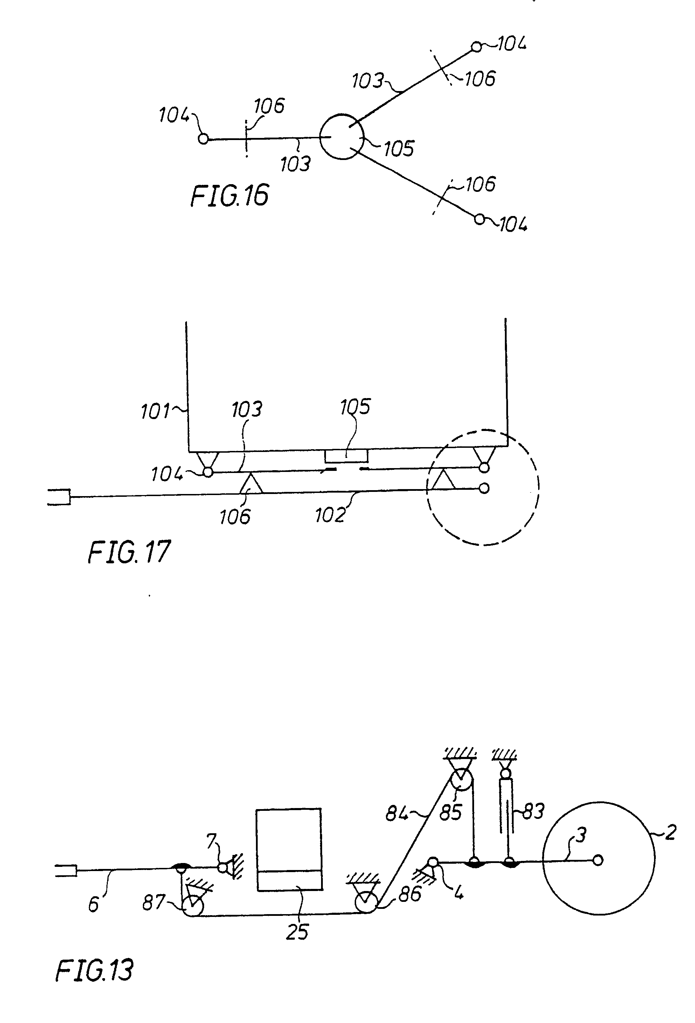

With the embodiment according to Figure 13 a setting cylinder 83 is provided between the frame and a point located between the ends of the wheel arm 3. The end of a cable 84 is secured to the wheel arm, in a further point located between the ends of the wheel arm 3. Said cable 84 is passed, in the manner illustrated in Figure 13, over three pulleys 85 - 87 that are secured to the frame of the wagon. The end of the cable 84 remote from the drawbar 3 is secured to the lower side of the drawbar 6, in a point located between the ends of the drawbar 6. The wheel 2 can be pivoted upwards or downwards about the pivot axis 4 again by means of the setting cylinder 83. It will be apparent that an upward or a downward movement of the wheel 2, as the case may be, with respect to the wagon will also result in an upward or downward movement of the free end of the drawbar 6 with respect to the frame of the wagon. When the various parts are correctly dimensioned it will be possible to effect a parallel movement of the loading floor of the wagon with this embodiment as well.

In the above-described embodiments use has always been made of a mechanical connection between the wheel arm 3 and the drawbar 6. It will also be possible to use hydraulic means for the connection between the wheel arm 3 and the drawbar 6, as will be explained in more detail hereafter with reference to Figures 14 and 15.

With the embodiment according to Figure 14 a setting cylinder comprising a piston rod 88 and a cylinder 89 is provided between the frame of the wagon and a point located between the ends of the drawbar 6. Via a three-way valve 90 pressurized fluid may be supplied to and discharged from the space in the cylinder 89 located above the piston 91 secured to the piston rod 88. The space in the cylinder 89 located under said piston 91 is connected, by means of a line 92, to a setting cylinder 93, which is provided between the frame of the wagon and the wheel arm 3, in a point located between the ends of the wheel arm 3.

In the illustrated position of the three-way valve 90 no fluid can flow into or out of the setting cylinder 89, so that the two setting cylinders 89 and 93 are blocked in the illustrated position, and it is not possible for the drawbar 6 and the wheel arm 3 to pivot with respect to the frame.

When the three-way valve 90 is moved towards the right, when seen in Figure 14, pressurized fluid may be forced into the space located above the piston 91, causing the piston 91 with the piston rod 88 to move downwards, when seen in Figure 14, also pivoting the free end of the drawbar 6 downwards thereby.

The fluid present in the cylinder 89, under the piston 91, is forced towards the setting cylinder 93 via the line 92, causing said setting cylinder 93 to pivot the wheel arm 3 about the pivot axis 4, in order to move the wheel 2 downwards.

When conversely the valve 90 is moved from the position illustrated in Figure 14 towards the left, the space in the setting cylinder 89 located above the piston 91 will be put into open communication with a discharge line, so that the piston 91 can be moved upwards in the setting cylinder 89 under the influence of the weight of the vehicle, in order to force fluid out of the setting cylinder 89. Fluid present in the setting cylinder 93 will thereby be forced, via the line 92, to the space in the cylinder 89 located under the piston 91 under the influence of the load on the wheel 2. It will be seen that both the free end of the drawbar 6 and the wheel 2 can move upwards with respect to the frame. By correctly dimensioning the setting cylinders and the coupling locations of the setting cylinders and the like it can again be effected that an upward or downward movement of the free end of the drawbar 6 and the wheels 2 will again result in an at least substantially parallel movement of the loading platform of the wagon. By ascertaining the fluid pressure in the setting cylinders an indication can be obtained as to the weight of the load.

If required the construction illustrated in Figure 4 may be supplemented with a further three-way valve 95, which is connected to the line 92 via a line 94, by means of which valve pressurized fluid can be supplied to and discharged from the cylinder 93. This makes it possible also to pivot the wheel arm 3 independently of the drawbar 6 with respect to the frame of the wagon as well, as a result of which the inclination of the loading platform of the wagon can be adjusted with respect to the horizontal.

With the embodiment according to Figure 15 a setting cylinder 96 is provided between the frame and a point on the wheel arm 3 located between the ends of said wheel arm 3. Pressurized fluid may be supplied to or discharged from the setting cylinder 96 by means of a three-way valve 97 corresponding with the three-way valve 90 and 95.

A setting cylinder 98 is provided between the frame of the wagon and a point on the drawbar 6 located between the ends of said drawbar 6. Said setting cylinder 98 is connected to the setting cylinder 96 by means of a line 99, a valve 100 being provided in said line 99. In the illustrated position of the valve 100 the two setting cylinders 96 and 98 are in open communication. As a result of this the wheel 2 will be pivoted downwards with respect to the frame of the wagon, about the pivot axis 4, when pressurized fluid is supplied to the upper end of the setting cylinder 96. Oil forced out of the setting cylinder 6 flows towards the upper end of the setting cylinder 98. Said oil supplied to the setting cylinder 98 will result in pivoting of the drawbar 6, in such a manner that also the free end of said drawbar 6 will move downwards with respect to the frame. When oil is allowed to flow out of the upper end of the setting cylinder 96, by adjusting the valve 97, both the wheel 2 and the free end of the drawbar will move upwards again.

By adjusting the valve 100 the connection between the setting cylinders 96 and 98 may be interrupted. When in that case the setting cylinder 96 is operated this will result in a change in the angle of inclination of the loading platform with respect to the horizontal.

Also for weighing the contents of the wagon there are several possibilities, besides the ones disclosed above.

Figures 16 and 17 diagrammatically illustrate an embodiment wherein a loading space 101 is supported by a frame 102. Between the frame 102 and the loading space 101 there are provided three arms 103, each with one end being vertically pivotally coupled to the loading space 101, by means of a pivot axis 104. The ends of the arms 103 remote from the pivot axes 104 are located under a pressure box 105 secured to the loading space 101. As is apparent from Figure 16 the arms 103 thereby extend from the pressure box 105 into different directions. Furthermore the arms 103 are each pivotally supported between their ends by a support 106 secured to the frame 102.

It will be apparent that as the load in the loading space 101 increases, the forces exerted by the arms 103 on the pressure box 105 will increase as well. This application has led to a simple embodiment, whereby the entire weight of the loading space 101 can be measured by means of a single pressure box 105. Instead of being secured to the loading space 101 the pressure box 105 may also be secured to the chassis 102, by means of a bridge connecting the pressure box 105 to the frame 102, the construction of said bridge being such that the bridge does not interfere with the movement of the arms 103.

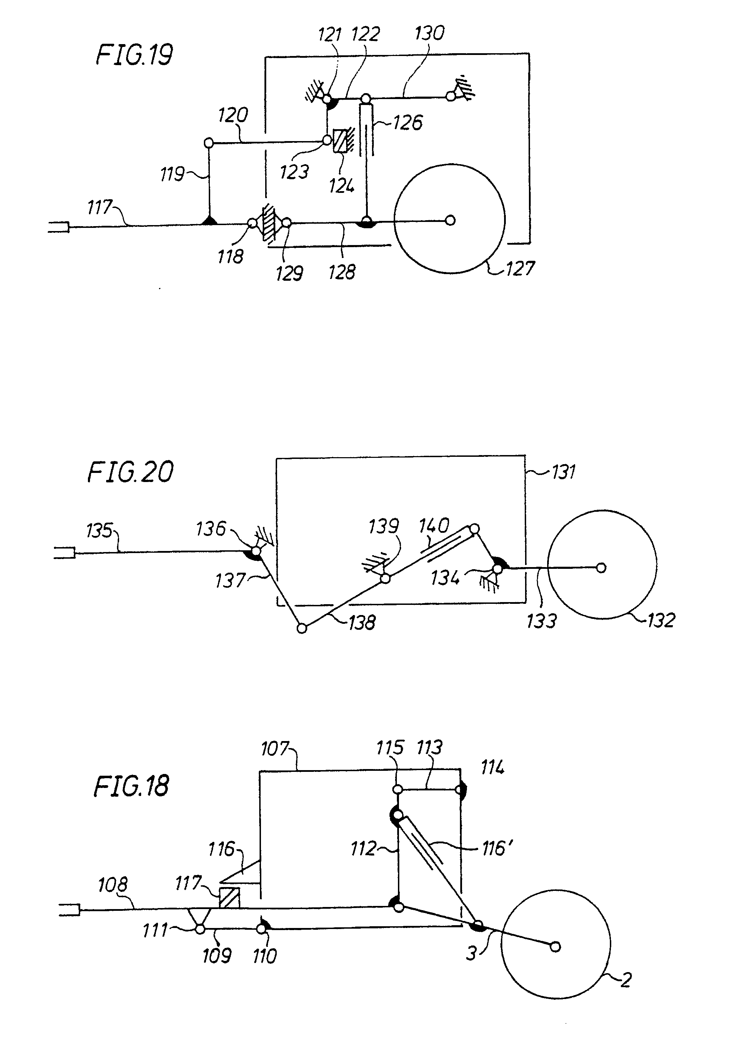

With the embodiment according to Figure 18 a loading space 107 is coupled near its front side to the frame 108, by means of a coupling rod 109. Said coupling rod 109 is connected to the front lower end of the loading space 107 by means of a pivot axis 110 extending horizontally and perpendicularly to the longitudinal direction of the wagon, and furthermore to the frame 108 by means of a pivot axis 11 extending parallel to the pivot axis 110. An upwardly extending arm 112 of the frame is coupled to the rear side of the loading space 107, in a point located near the upper side of said loading space, by means of a coupling rod 113 and two pivot axes 114 and 115 extending parallel to the pivot axes 110.

It will be apparent that the loading space 107 can move upwards and downwards a little as a result of the pivoting movement of the arms 109 and 113 supporting the loading space, said arms of course being provided on both sides of the loading space. A projecting nose 116 secured to the front side of the loading space thereby co-operates with a pressure box 117 ascertaining the load. Also in this embodiment use may be made of vertically adjustable wheels 2 supporting the wagon, a setting cylinder 116' possibly being provided between the wheel arms 3 and the frame.

With the embodiment according to Figure 19 a drawbar 117 is pivotally coupled to the frame of the wagon, by means of a pivot axis 118 extending horizontally and perpendicularly to the longitudinal direction of the wagon. In a point of the drawbar 117 located between the ends of said drawbar an upwardly extending arm 119 is secured to said drawbar. To the upper end of the arm 119 there is coupled one end of a coupling rod 120. The other end of said coupling rod 120 is coupled to a toggle lever 122, which is pivotable about a pivot axis 121 with respect to the frame of the wagon, in a pivot point 123 that abuts against a pressure box 124 secured to the frame of the wagon. The free end of the other arm of said toggle lever 122 is coupled to one end of a setting cylinder 126, whose other end is coupled to a wheel arm 128 supporting a ground wheel 127 supporting the wagon. Said wheel arm 128 is pivotable with respect to the frame, about a pivot axis 129. Between the upper end of the setting cylinder 126 and the frame of the wagon there is furthermore provided a guide rod 130.

It will be obvious that the forces working on the free end of the drawbar 117 and on the wheels 127 will be transmitted in point 123 to the pressure box 124 via the various arms for determining the weight of the wagon. In this embodiment also the wheels 129 can be adjusted in a vertical direction by using setting cylinder 126.

With the embodiment illustrated in Figure 20 the loading space 131 is supported by means of wheels 132, which are secured to the ends of arms of toggle levers 133, which are pivotable with respect to the frame about a pivot axis 134 extending horizontally and perpendicularly to the longitudinal direction of the wagon. A drawbar 135 is coupled to the front end of the wagon by means of a pivot axis 136 extending parallel to the pivot axis 134. To the end of the drawbar 135 located near the pivot axis 136 there is secured an arm 137 sloping downwards towards the rear from the drawbar 135. To the end of said arm 137 remote from the drawbar 135 there is coupled the free end of a rod 138, which acts with its other end on a pressure box 139. A setting cylinder 140 is furthermore provided between the pressure box 139 and the toggle lever 133. It will be apparent that the force exerted on the drawbar 135 will be transmitted to the pressure box 139 via the parts 137 and 138, whilst the forces exerted on the wheels 132 are transmitted to the pressure box 139 via the setting cylinder(s) 140, in order to be able to ascertain the total weight of the wagon. By using the setting cylinder-(s) it is also possible in this embodiment to move the wheels vertically with respect to the frame. Instead of a pressure box it will also be possible to use other measuring means, e.g. a bending bar.

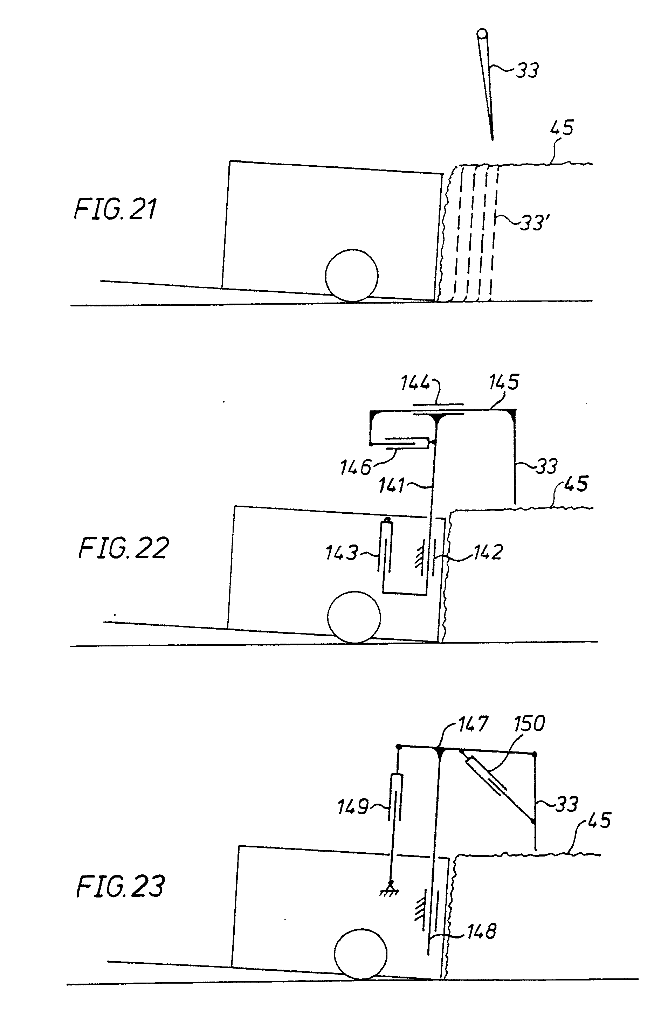

As already explained above and as is diagrammatically indicated in Figure 21 again, it is desirable and also feasible with the above-described embodiment, that the lower end of the loading board 33, in order to remove crop from a heap of crop 35, is moved from the top of the heap of crop to the bottom as well as possible along an at least substantially vertical plane 33'. This may be achieved by means of several other embodiments, besides the one described above, as will be explained in more detail hereafter with reference to Figures 22 - 27.

With the embodiment illustrated in Figure 22 use is made of an upwardly extending supporting structure 141, which can be moved upwards and downwards in a guide structure 142 by means of a setting cylinder 143. To the upper end of said supporting structure 142 there is provided an at least substantially horizontally extending guide means 144, in which a carrier 145 is reciprocatingly movable by means of a setting cylinder 146. To the end of said carrier 145 there is secured the loading board 33 that extends downwards from said carrier.

It will be apparent that when the construction according to Figure 22 is used the loading board 33, once it is located above the heap 45, as is illustrated in Figure 22, can be moved downwards by means of the setting cylinder 143, in order to detach a portion of fodder. Subsequently the detached portion of fodder can be pulled into the loading space, by moving the loading board 33 with the carrier 145 towards the left, when seen in Figure 2, by means of the setting cylinder 146.

With the embodiment according to Figure 23 use is made of a T-shaped supporting structure 147, which is reciprocatingly movable in a guide 148 by means of a setting cylinder 149, which acts on one end of the horizontally extending part of the T-shaped support structure 147. On the other end of the horizontal part of the T-shaped supporting structure there is provided the loading board 33. In the illustrated embodiment a further setting cylinder 150 is provided between the support structure 147 and the loading board 133. It will be apparent that from its position illustrated in Figure 23 the loading board 33 can be forced at least substantially vertically downwards into the heap of material 45, in order to cut off a portion of fodder or the like. The cut-off material can be moved into the loading space of the wagon by pivoting the loading board 33 with the setting cylinder 150.

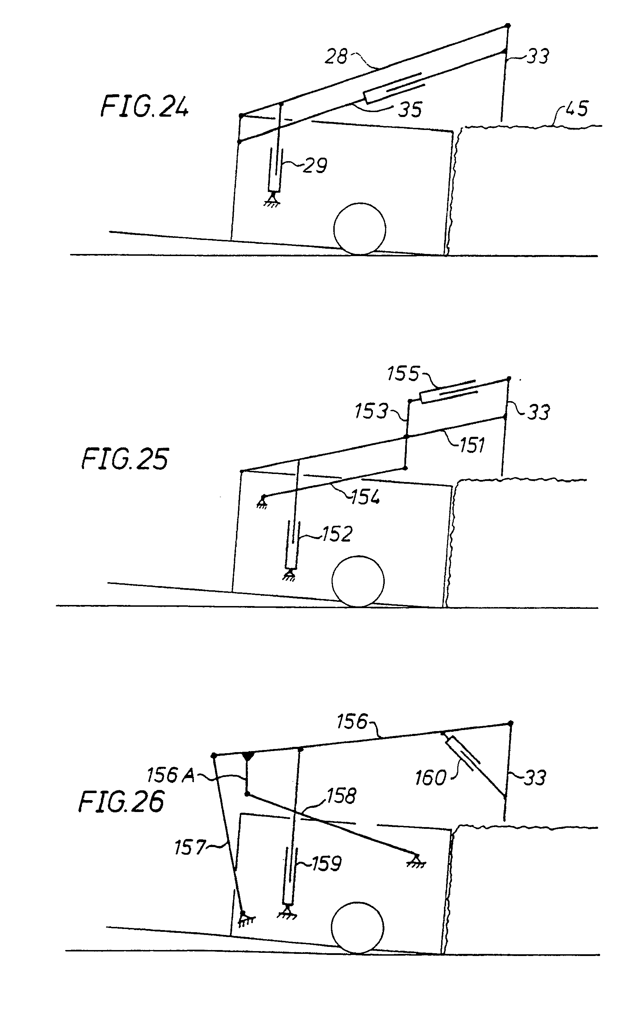

The embodiment according to Figure 24 at least substantially corresponds with the embodiment described first, consequently corresponding parts have been given the same reference numbers as the ones used in Figures 1 - 4. The main difference between the embodiment according to Figures 1 - 4 and the one according to Figure 24 is constituted by the location of the front pivot points of the arms 28 and 35, but also with this embodiment the lower end of the loading board can be moved at least substantially vertically downwards through the heap 45, by actuating the setting cylinder 29. If it is required to use a different path this may be effected by actuating the setting cylinder present in the arm 35.

With the embodiment according to Figure 25 the loading board 33 is pivotally coupled between its upper and lower edge to the end of an arm 151, which is pivotally coupled to the wagon with its other end. Said arm 151 is thereby pivotable by means of a setting cylinder 152, which is provided between the arm 151 and the frame of the wagon.

Between the ends of the arm 151 a lever 153 is pivotally coupled to the arm 151. The end of the lever 153 located under the arm 151 is coupled to one end of a coupling rod 154, said rod 154 with its other end being coupled to the frame of the wagon. Between the end of the lever 153 located above the arm 151 and the upper end of the loading board 33 there is provided a setting cylinder 155.

By pivoting the arm 151 by means of the setting cylinder 152 the loading board 33 can be moved upwards and downwards. Furthermore the loading board 33 can be pivoted by means of the setting cylinder 155, in order to push cut-off material into the loading space.

With the embodiment according to Figure 26 the loading board 33 is pivotally coupled, near its upper edge, to one end of an arm 156. The other end of said arm 156 is pivotally coupled to the upper end of an arm 157, said arm 157 with its lower end being pivotally coupled to the frame of the wagon. A further arm 158 is coupled to the arm 156 with its upper end, by means of a short connecting arm 156A, which is secured to the arm 156 between the ends of said arm 156, and which extends perpendicularly to said arm 156. The end of the coupling rod 158 remote from the arm 156 is pivotally coupled to the frame of the wagon. Between the arm 156 and the frame of the wagon there is furthermore provided a setting cylinder 159.

A setting cylinder 160 is provided between the loading board 33 and the arm 156.

By means of the setting cylinder 159 the loading board can be moved upwards and downwards, whilst the loading board can be pivoted with respect to the arm 156 by means of the setting cylinder 160. Also with this embodiment the loading board is movable in a manner similar to the preceding embodiment.

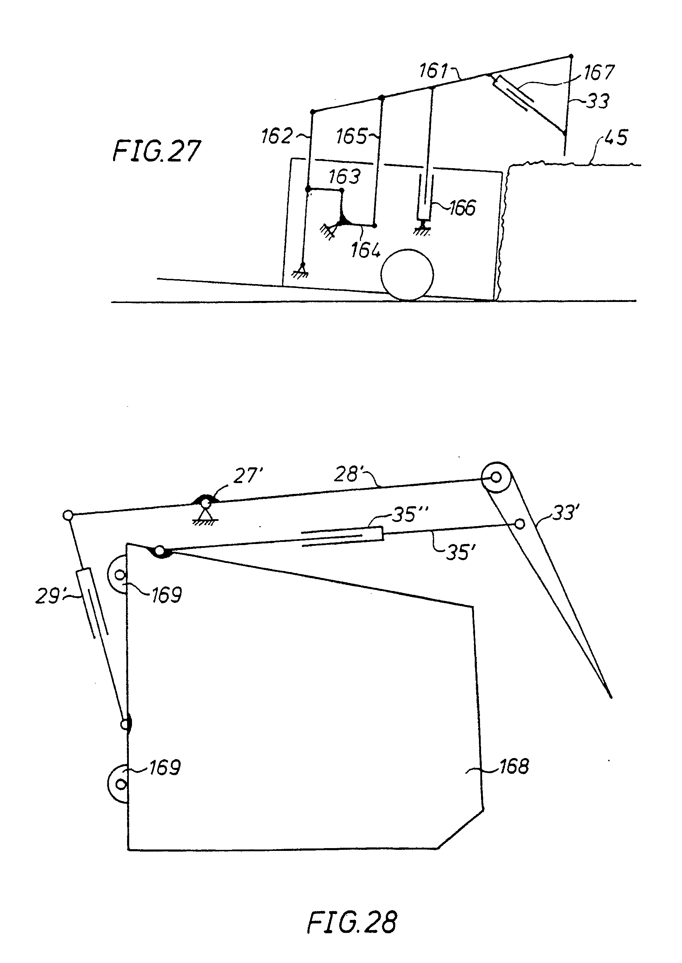

With the embodiment illustrated in Figure 27 the loading board is pivotally connected to the end of a supporting arm 161.

The end of the supporting arm 161 remote from the loading board 33 is pivotally coupled to the end of an arm 162, said arm 162 near its lower end being connected to the frame of the wagon.

Between the ends of the arm 162 there is pivotally coupled an arm 163, which extends transversely to said arm 162. The end of the arm 163 remote from the arm 162 is pivotally coupled to a toggle lever 164, which in turn is pivotally coupled to the frame. Said toggle lever 164 is connected to the arm 161 again by means of a coupling rod 165, in the manner illustrated in Figure 27, in a point located between the ends of the arm. Between the supporting arm 161 and the frame of the wagon there is furthermore provided a setting cylinder 166. The loading board 33 is pivotable with respect to the arm 161, by means of a setting cylinder 167 provided between the loading board 33 and the arm 161. Also in this case the loading board 33 can be pivoted upwards or downwards by means of the setting cylinder 166, whilst the loading board 33 can be pivoted with respect to the arm 161 by means of the setting cylinder 167.

It will also be conceivable e.g. to connect the two arms 162 and 165 together by hydraulic means, e.g. interconnected setting cylinders.

In the above-described embodiments mention has always been made of a mobile transport device in the shape of a wagon supported by ground wheels, which can be attached to the tractor or the like by means of a drawbar, whereby possibly the wheels supporting the wagon and/or the drawbar are vertically adjustably coupled to the frame of the wagon. It will be apparent, however, that many of the above-described constructions can also be used on a transport device carried by a tractor or the like, e.g. in the shape of a loading body 168 diagrammatically illustrated in Figure 28, which is provided with connecting means 169, by means of which the loading body can be attached to the three-point lift of a tractor or the like. Also in this case the loading board 33' is connected to the device by means of a pair of arms 28' and 35', which arm 35' can be telescopically extended and retracted in its longitudinal direction by means of a setting cylinder 35" accommodated therein. Said arm 28' is pivotable with respect to the frame of the transport device in a pivot point 27' located between its ends, by means of a setting cylinder 29'.

It will be apparent that many of the above-described constructions may be used in combination with such a portable mobile transport device.

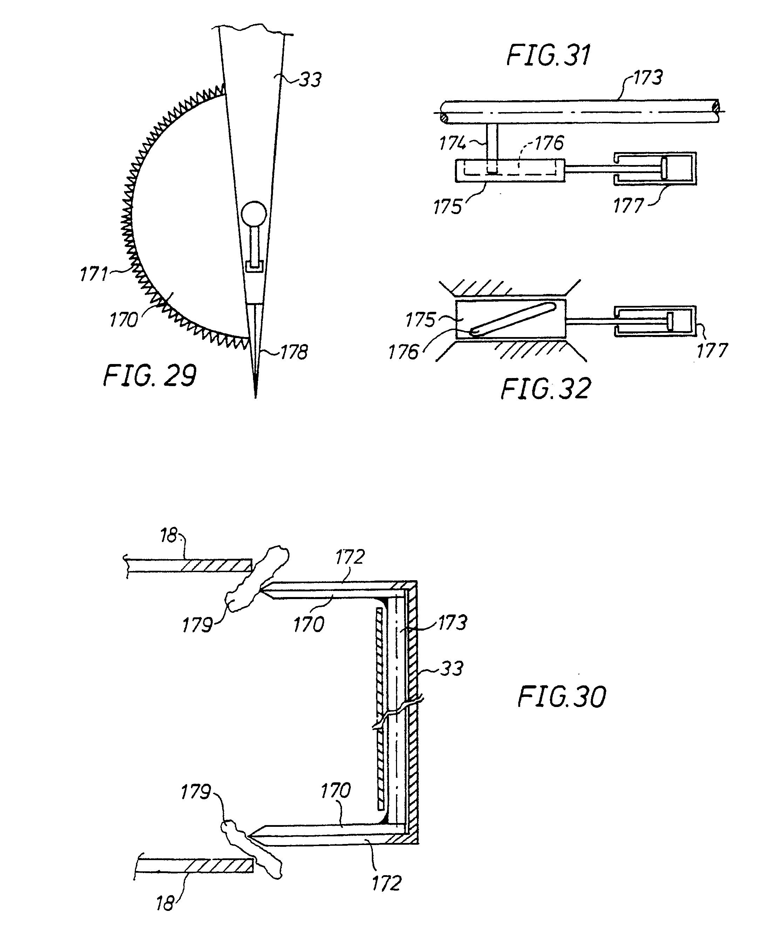

In order to achieve an effective detachment of the crop to be loaded segmental knives 170 may be provided on one or on both sides of the loading board 33, as is illustrated in Figures 29 and 30. Said segmental knives 170 extend from the lower edge of the loading board in the direction of the side wall parts 18 of the loading space of the wagon. Said knives 170, in the shape of a segment of a circle, whose knurled cutting edges 171 extend at an angle of about 180°, abut against the facing sides of corresponding support plates 172, in the shape of a segment of a circle, secured to the ends of the loading board 33, which support plates 172 may likewise be provided with a, whether or not knurled, curved cutting edge.

The knives 170 in the shape of a segment of a circle are secured to the ends of a shaft 173, which is located in the interior of the hollow loading board and which extends horizontally and perpendicularly to the longitudinal direction of the wagon, said shaft being supported by bearings (not shown). To said shaft 173 there is secured a pin 174 extending perpendicularly to said shaft (Figure 31). The free end of said pin 174 is located in a groove 176 provided in a guide 175. Said guide 175 is reciprocatingly movable in its longitudinal direction, parallel to the longitudinal direction of the rod 173, by means of a setting cylinder 177 arranged in the interior of the hollow loading board 33, by means of which setting cylinder 177 a cutting knife 178, provided at the lower side of the loading board 33 and extending along the longitudinal direction of the lower edge of the loading board 33, can likewise be moved reciprocatingly in a manner known per se.

As appears from Figure 32 the longitudinal axis of the groove 176 includes an angle with the direction of the reciprocating movement of the sliding piece 175. Accordingly a reciprocating movement of the sliding piece 175 will result, via the pin 174, in pivoting of the shaft 173 about its longitudinal axis. As a result of that also the segmental cutting knives 170 will be pivoted about the central axis of the shafts 173, by which action the crop is cut loose.

Also when the crop is being introduced the knives may be used in order to be able to cut through crop parts 179 which become wedged between the side wall parts 18 and the sides of the loading board 33.

Since the cutting means 170 has the shape of a segment of a circle, said cutting means will be able to effect an efficient cutting-off of the crop, both when the loading board 33 moves downwards through a heap of material, and when the loading board moves in the direction of the loading space, after the loading board has penetrated the heap of material along a certain distance.

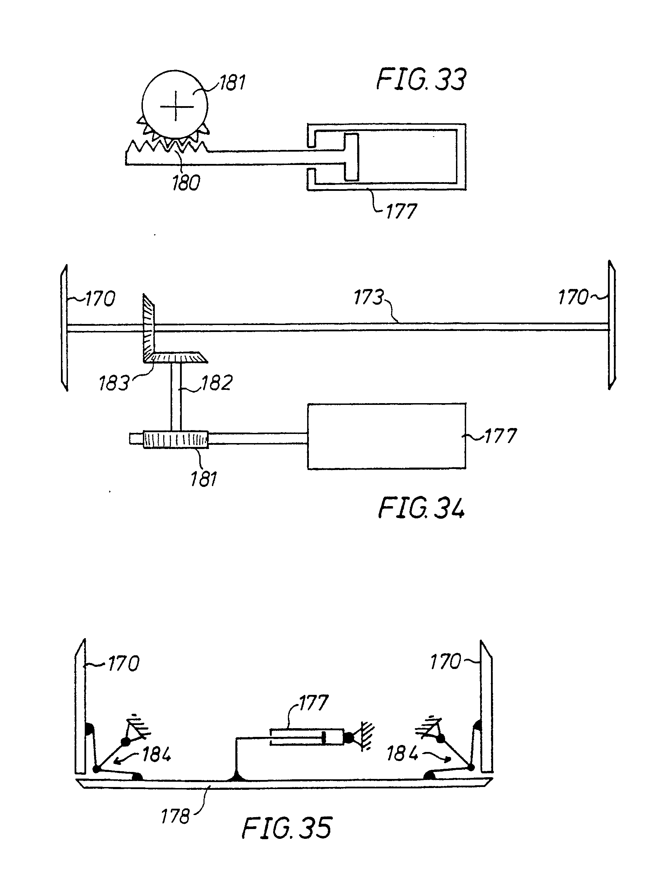

Of course also other driving possibilities for the shaft 173 with the cutting knives 170 secured thereto are conceivable. As is illustrated in Figures 33 and 34 the piston rod of the setting cylinder 177 is provided with teeth 180, which are in engagement with a gear 181. Said gear 181 is coupled to a shaft 182, which is coupled to the shaft 173 by means of a right-angled gear transmission 183. It will be apparent that also with this embodiment a reciprocating movement of the piston rod with the teeth 180 will result in a reciprocating movement of the cutting means 170 about the central axis of the shaft 173.

With the embodiment according to Figure 35 the ends of the cutting knife 178 extending along the lower edge of the loading board 33 and being reciprocatingly movable by means of a setting cylinder 177, are coupled to the segmental cutting means 170, which extends perpendicularly to said cutting knife, by means of a system of rods 184 constructed in such a manner that a reciprocating movement of the knife 178 is converted into a reciprocating, pivoting movement of the cutting means 170.

Although hereinabove mention has been made of a loading board 33, it will be apparent that, at least in many of the embodiments which have been discussed, it will also be possible to use a loading fork; the term loading board used in the description and the claims should be given a broad interpretation, so as to comprise also a loading fork or other loading means.

It is furthermore noted that the term mobile transport device should be interpreted to comprise a wagon supported by ground wheels, which can be attached to a tractor or the like by means of a drawbar, as well as a device which is partly or completely carried by a tractor.

## Claims

1. A mobile transport device for removing crop from a silage pit, said device being provided with a frame with a loading platform and a loading space located thereabove, said loading space being bounded at least by upright side boards, an upwardly extending loading board being located near one end of said loading space, said loading board near its upper end being pivotally coupled about a horizontal pivot axis to a pair of arms located near the sides of the transport device, said arms near their ends remote from the loading board being pivotally coupled to the frame, by means of further pivot axes extending parallel to said first cited pivot axis, whilst between at least one arm and the frame there is provided a setting means, by means of which the arms with the loading board are pivotable about said further pivot axes with respect to the frame, characterized in that a further pair of telescopically adjustable arms located near the sides of the transport device are disposed between the loading board and the frame, said arms with their respective ends being pivotally coupled, likewise by means of horizontal pivot axes, to the loading board and the frame respectively.

2. A transport device according to claim 1, characterized in that between the ends of the arms directed towards the loading board there are provided connecting beams, said beams being connected to the loading board by means of supports, which are secured to said connecting beams in points located between the arms in question.

3. A transport device according to claim 1 or 2, characterized in that said further telescopically adjustable arms are located between the other arms, when seen in plan view.

4. A transport device according to claim 1 or 2, characterized in that said further telescopic arms are located outside the other arms, when seen in plan view.

5. A transport device according to any one of the preceding claims, characterized in that said telescopically adjustable arms are located under the other arms, when seen in side view.

6. A transport device according to any one of the preceding claims, characterized in that said telescopically adjustable arms are located above the other arms, when seen in side view.

7. A transport device according to any one of the preceding claims, characterized in that the points in which the telescopically adjustable arms are coupled to the frame are disposed in front of the points in which the other arms are coupled to the frame, when seen in the longitudinal direction of the wagon.

8. A transport device according to any one of the preceding claims, characterized in that the arms are coupled to the frame near the front side of the loading space, at the upper side of said loading space.

9. A mobile transport device for removing crop from a silage pit, said transport device being provided with a frame supported by ground wheels, with a loading platform and a loading space located thereabove, said loading space being bounded at least by upright side boards, near one end of which loading space there is provided a drawbar for attaching the transport device to a tractor or the like, an upwardly extending loading board being located near an opposite end of said loading space, said loading board near its upper end being pivotally coupled, about a horizontal pivot axis, to a pair of arms located near the sides of the transport device, said arms near their ends remote from the loading board being pivotally coupled to the frame by means of further pivot axes extending parallel to said first cited pivot axis, said arms being pivotable with respect to the frame and said loading board being pivotable with respect to the arms by way of driving means, whilst the ground wheels are secured to supporting arms, which are pivotable with respect to the frame, by way of setting means, about a horizontal pivot axis extending transversely to the longitudinal direction of the transport device, characterized in that said drawbar is coupled to the frame by means of a further horizontal pivot axis extending transversely to the longitudinal direction of the transport device, whilst between the drawbar and the supporting arms there is provided a coupling mechanism, in such a manner that when the setting means are actuated the drawbar and the supporting arms are pivoted, whilst the loading platform is caused to move at least parallel to itself.

10. A transport device according to claim 9, characterized in that said drawbar and said supporting arms are interconnected by means of a rod system, and that at least one setting cylinder is provided, by means of which said rod system is pivotable with respect to the frame.

11. A transport device according to claim 10, characterized in that said supporting arms extend towards the rear from the axes of rotation of the wheels, and are coupled to the frame by means of a pivot axis located behind said wheels, whilst upwardly extending arms are secured to the ends of said supporting arms located near said pivot axis, said arms being coupled, by means of a coupling rod, to upwardly extending arms which are connected to the drawbar, near the pivot axis by which the drawbar is pivotally coupled to the frame.

12. A transport device according to claim 7, characterized in that the drawbar and the supporting arms are mutually coupled by means of at least one flexible pulling means provided between the drawbar and the supporting arms, said pulling means being passed over at least one pulley which is secured to the frame.

13. A transport device according to any one of the claims 9 - 12, characterized in that an adjusting means is provided in the coupling mechanism, by means of which the supporting arms are adjustable with respect to the drawbar.

14. A transport device according to any one of the claims 9 - 13, characterized in that between the drawbar or at least one supporting arm and the frame there is coupled a setting cylinder, which setting cylinder is coupled to a control mechanism, by means of which pressurized fluid can be supplied to or discharged from said setting cylinder, at one side of a piston located in said setting cylinder, whilst the space of the setting cylinder located at the other side of the piston is connected to a second setting cylinder, which is provided between the frame and a supporting arm, or the drawbar, as the case may be.

**15.** A transport device according to claim 14, characterized in that said second setting cylinder acts on at least one supporting arm, and that fluid can be supplied, by means of a further control mechanism, to said setting cylinder, or be discharged from said setting cylinder, via the connection between the two setting cylinders.

**16.** A transport device according to claim 14, characterized in that said second setting cylinder acts on the drawbar, and that means are provided by which the connection between the two setting cylinders can be established or broken, as required.

**17.** A mobile transport device provided with a frame supported by ground wheels, with a loading platform supported by the frame and with a drawbar, by means of which the frame can be attached to a tractor or the like, said ground wheels being mounted on arms which are pivotable with respect to the frame, whilst between the arms and the frame there are provided stabilizing means which are pivotally coupled to the frame, said stabilizing means attempting to keep the arms in a desired position with respect to the frame, characterized in that said drawbar is likewise coupled to the frame so as to be vertically movable, and that further stabilizing means are provided between the frame and the drawbar, said stabilizing means attempting to keep the drawbar in a desired position with respect to the frame, whilst the various stabilizing means are equipped with measuring means for ascertaining the forces exerted on said stabilizing means.

**18.** A transport device according to claim 17, characterized in that said stabilizing means comprise at least one setting cylinder, by means of which the supporting arms and the drawbar are pivotable with respect to the frame.

**19.** A transport device according to claim 17, characterized in that said drawbar acts on a pressure take-up means by means of a rod transmission, whilst the supporting arms of the ground wheels likewise act on said pressure take-up means by means of a rod transmission.

**20.** A transport device according to claim 19, characterized in that a setting device is disposed in the rod transmission of the supporting arms of the ground wheels and the pressure take-up means, by means of which setting device the running wheels can be pivoted in vertical direction with respect to the frame.

**21.** A transport device according to claim 17, characterized in that a loading space of said transport device is mounted so as to be vertically movable in the frame by means of a system of rods, and that said loading space is supported by a pressure measuring device in at least one point.

**22.** A transport device provided with a frame and with a loading space supported by said frame, characterized in that said loading space is coupled to the frame so as to be vertically movable, and that said loading space co-operates with a pressure measuring device in order to determine the weight of the loading space and its contents.

**23.** A transport device according to claim 22, characterized in at least three arms are pivotally coupled to said loading space, by means of pivot axes extending at least substantially horizontally, whilst the ends of the arms remote from each other are located near a pressure take-up means, from where the arms extend in different directions, whilst the arms are pivotally supported on the frame of the transport device between their ends.

**24.** A transport device according to claim 22, characterized in that the loading space is suspended in the frame so as to be vertically movable by means of rods.

**25.** A mobile transport device provided with a frame supported by ground wheels, with a loading platform, supported by said frame, of a loading space located thereabove, bounded at least by upright side boards, near one end of which there is located an upwardly extending loading board, said loading board near its upper end being pivotally coupled, about a horizontal pivot axis, to a pair of arms located near the sides of the transport device, said arms near their ends remote from the loading board being pivotally coupled to the frame, by means of further pivot axes extending parallel to said first cited pivot axis, said arms being pivotable with respect to the frame and said loading board being pivotable with respect to said arms by way of driving means, characterized in that near its lower side, at at least one side, the loading board is provided with a knife in the shape of a substantially vertical segment of a circle extending through ± 180°, said knife being reciprocatingly movable about its centre located at the side of said segment of a circle remote from the loading space.

26. A transport device according to claim 25, characterized in that a knife is provided on both sides of the loading board.

27. A transport device according to claim 25 or 26, characterized in that a knife is driven by means of a setting cylinder.

28. A transport device according to any one of the claims 25 - 27, characterized in that a knife is secured to a shaft extending horizontally in the loading board and transversely to the longitudinal direction of the transport device, said shaft being pivotable to and fro about its central axis.

29. A transport device according to claim 28, characterized in that said shaft is coupled, by means of a transmission mechanism, to a setting cylinder, by means of which a knife provided at the lower side of the loading board can be moved reciprocatingly.

30. A transport device according to any one of the claims 25 - 29, characterized in that a knife, in the shape of a segment of a circle, extends along a correspondingly shaped supporting plate secured to the loading board.

31. A transport device according to claim 30, characterized in that said supporting plate is provided with a cutting edge co-operating with said knife.

32. A mobile transport device provided with a frame, with a loading platform supported by said frame and with a loading space located thereabove, said loading space being bounded at least by upright side boards, near one end of which there is located an upwardly extending loading board, characterized in that said loading board is secured to a supporting structure, which is reciprocatingly movable with respect to the frame, by way of setting means, in at least substantially vertical direction.

33. A transport device according to claim 32, characterized in that said loading board is secured to the end of a supporting bracket, which is reciprocatingly movable with respect to the frame, by way of setting means, in at least substantially horizontal direction.

34. A transport device according to claim 32, characterized in that said loading board is at its upper end pivotally connected to the supporting structure, about a pivot axis extending horizontally and perpendicularly to the longitudinal direction of the transport device, whilst setting means are provided, by which the loading board is pivotable about said pivot axis.

35. A mobile transport device provided with a frame, with a loading platform supported by said frame and with a loading space located thereabove, said loading space being bounded at least by upright side boards, near one end of which there is located an upwardly extending loading board, characterized in that said loading board is pivotally coupled between its ends, by means of a pivot axis extending horizontally and perpendicularly to the longitudinal direction of the transport device, to the ends of arms, whose other ends are pivotally coupled to the frame, whilst to the upper end of said loading board there is coupled a setting cylinder, which, at its end remote from said loading board, is pivotally coupled to the end of a lever located above the arms, which is pivotally connected to said pivot axis, whilst the end of said lever located under the arms is coupled to the frame by means of a coupling rod, and the arms are pivotable with respect to the frame by means of a setting cylinder.

36. A mobile transport device provided with a frame, with a loading platform supported by said frame and with a loading space located thereabove, said loading space being bounded at least by upright side boards, near one end of which there is located an upwardly extending loading board, said loading board near its upper end being coupled, about a horizontal pivot axis, to a pair of arms located near the sides of the transport device, characterized in that said arms are coupled, with their ends remote from the loading board, to the ends of arms which in turn are pivotally coupled to the frame, whilst between the ends of the arms coupled to the loading board, to said arms, there are pivotally coupled the ends of further arms, the ends of said arms remote from said former arms being likewise pivotally coupled to the frame.

37. A transport device according to claim 36, characterized in that the arms that connect the arms supporting the loading board to the frame are interconnected by means of a toggle lever.

38. A transport device according to claim 36, characterized in that the arms supporting the loading board are interconnected by hydraulic means.

39. A transport device according to any one of the preceding claims, characterized in that to the loading board there is coupled and indicator, for providing an indication as to the position of the loading board with respect to the frame, more in particular the position of the lower end of the loading board with respect to the rear side of the loading platform.

40. A transport device according to claim 39, characterized in that said indicator is disposed near the front side of the loading space.

41. A system for mixing fodder while making use of a mobile transport unit, said transport unit being provided with a frame and with a loading space supported by the frame, said loading space having means of conveyance for conveying fodder present in the loading space in the longitudinal direction of the loading space, and with a cross conveyor located near one end of the loading space, by means of which the fodder supplied to the cross conveyor by said means of conveyance can be discharged from the wagon, characterized in that said system furthermore comprises a housing having a stationary arrangement, with throwing means present therein, said housing in combination with the conveyor being designed such that fodder can be supplied to the throwing means accommodated in said housing by means of the cross conveyor, whilst a discharge line is connected to the housing, whose outlet opening will be located above the loading space during operation of the system.

42. A system according to claim 41, characterized in that said throwing means is designed such that the fodder can be cut by said throwing means.

43. A system according to claim 41 or 42, characterized in that means are provided for supplying concentrated feed or the like to the fodder moving through the system.

44. A system according to claim 43, characterized in that said means for supplying concentrated feed or the like are connected to the housing enclosing the throwing means.

45. A system according to claim 43 or 44, characterized in that means are provided for weighing said concentrated feed or the like, in such a manner that measured quantities of concentrated feed or the like can be admixed.

46. A method for detaching crop from a heap of crop by means of a transport device, which is provided with a loading board near its end, said loading board first being moved downwards through the heap of crop and then into the direction of the loading space of the transport device, characterized in that during its downward movement through the heap of crop said loading board is controlled in such a manner, that the lower edge of the loading board moves at least substantially along a vertical plane.

FIG.1

III →

EP 0 440 290 A2

FIG. 2

FIG. 3

FIG. 4

EP 0 440 290 A2

FIG.5

EP 0 440 290 A2

FIG.6

EP 0 440 290 A2

FIG.7

FIG.8

FIG.9

FIG.10

FIG.11

FIG.12

FIG.14

FIG.15

FIG.16

FIG.17

FIG.13

FIG.19

FIG.20

FIG.18

FIG.21

33

45

33'

FIG.22

144 145

146 141 33 45

143 142

FIG.23

147 150

149 33 45

148

FIG.24

28 — 33
35 45
29

FIG.25

155
153 33
151
154
152
45

FIG.26

156
156 A 160 33
158
157 159

*FIG.27*

*FIG.28*

FIG. 29

FIG.31

FIG.32

FIG.30

31

FIG. 33

FIG. 34

FIG. 35